# FASCICULE DE BREVET EUROPEEN

(11) **EP 0 834 276 B1**
(45) Date de publication et mention de la délivrance du brevet: **17.05.2000**
(21) Numéro de dépôt: 97420185.7
(22) Date de dépôt: 03.10.1997
(51) Int. Cl.: A47J 43/07

(54) **Appareil électroménager de préparation culinaire, du genre robot ménager multi-usages**
Elektrisches Haushaltsgerät zur Nahrungszubereitung in der Art einer Vielzweckküchenmaschine
Electric kitchen appliance of the kind of multi-use food processors

(30) Priorité: 03.10.1996 FR 9612268
(43) Date de publication de la demande: 08.04.1998
(60) Demande divisionnaire: 99121388.5
(73) Titulaire: SEB S.A., 69130 Ecully (FR)
(72) Inventeur: Martin, Guy, 65290-Louey (FR)

(56) Documents cités:
- EP-A- 0 396 178
- DE-C- 382 060
- DE-C- 19 502 216
- FR-A- 1 420 840
- FR-A- 1 489 059
- FR-A- 2 183 321
- FR-A- 2 360 285
- US-A- 4 387 860
- PATENT ABSTRACTS OF JAPAN vol. 13, no. 536 (C-660), 29 novembre 1989 & JP 01 221122 A (MITSUBISHI ELECTRIC CORP ET AL.), 4 septembre 1989,
- PATENT ABSTRACTS OF JAPAN vol. 016, no. 213 (C-0942), 20 mai 1992 & JP 04 040919 A (HITACHI HOME TEC LTD), 12 février 1992,

## Description

La présente invention se rapporte au domaine technique général des appareils électroménagers de préparation culinaire du genre robot ménager multi-usages ou encore mini ou multi-hachoir, pourvus d'un ensemble de travail rotatif dont l'outil est incliné par rapport à l'axe de rotation dudit ensemble de travail.

Dans le cadre de l'invention, il convient d'entendre par les termes ensemble de travail rotatif dont l'outil est incliné tout type d'ensemble de travail comportant un outil disposé dans un plan dont la normale n'est pas confondue avec l'axe de rotation de l'ensemble de travail. Un tel outil peut comporter deux lames sensiblement parallèles, coplanaires ou non. Par le terme appareil électroménager de préparation culinaire, du genre robot ménager multi-usages, il convient d'entendre tous les appareils électriques dont l'ensemble de travail rotatif doit être disposé dans un réceptacle de manière à pouvoir assumer la fonction dévolue à l'outil, et ce indépendamment du type d'outil utilisé. Dès lors, le terme appareil de préparation culinaire revêt, au sens de l'invention un sens large incluant des appareils divers non limités par leur fonction de préparation culinaire qui peut consister à titre d'exemple non limitatif, à hacher, mélanger, broyer, émulsionner, etc...

Il est connu de réaliser des appareils tels que des robots ménagers ou des mini-hachoirs comportant un ensemble de travail rotatif tournant à une vitesse élevée, et dont l'outil de travail est disposé dans un plan dont la normale est inclinée par rapport à l'axe de rotation dudit ensemble de travail. De tels appareils comportent également, disposé dans le fond du récipient de travail, un dispositif de maintien de l'ensemble de travail selon son axe de rotation, tel qu'un insert. Une telle technique est largement répandue dans la plupart des petits appareils ménagers de préparation culinaire.

Le document FR 2 183 321 décrit un appareil électroménager coupeur-mélangeur, comportant un récipient de travail ainsi qu'un ensemble de travail rotatif entrainé, par l'intermédiaire d'un axe entraîneur monté dans une cheminée du récipient, par un moteur disposé sous le récipient de travail. L'ensemble de travail comporte deux lames inclinées par rapport à l'axe de rotation. L'ensemble de travail est maintenu par la cheminée.

Le document FR 2 360 285 décrit un appareil électroménager pour broyer des produits alimentaires, comportant un récipient de travail ainsi qu'un ensemble de travail rotatif entrainé par l'intermédiaire d'un axe entraîneur par un bloc moteur disposé sur l'appareil. L'ensemble de travail comporte deux lames montées de manière décalée sur l'axe de rotation, tournant selon deux plans parallèles. L'ensemble de travail est maintenu par un insert métallique disposé dans le fond du récipient de travail.

Les inconvénients de cette solution sont liés à la difficulté de nettoyer la cuve, puisque celle-ci comporte en son fond et en son centre un insert en général métallique s'opposant notamment à un bon nettoyage mais pouvant être également à l'origine d'une prolifération bactérienne. Par ailleurs, la présence d'un insert ou axe métallique empêche l'utilisation des cuves dans des fours classiques ou à micro-ondes, ce qui est souvent perçu comme une contrainte d'utilisation négative par les consommateurs. L'insert affecte l'ergonomie de la cuve et rend difficile le service en nuisant au déplacement des ustensiles au fond de la cuve. Enfin, sur le plan industriel, la mise en place de l'insert métallique constitue une étape supplémentaire dans un procédé de fabrication, menant à un surcoût.

L'objet de l'invention vise en conséquence à remédier aux différents inconvénients énumérés précédemment et à fournir un appareil électroménager de préparation culinaire de conception générale simplifiée, sans pour autant limiter sa facilité d'utilisation.

Un autre objet de l'invention vise à fournir un appareil électroménager de préparation culinaire dont la mise en oeuvre est particulièrement facile.

Un autre objet de l'invention vise à réaliser un appareil électroménager de préparation culinaire dont la manipulation est facilitée, et ce à l'aide de moyens particulièrement simples et éprouvés.

Les objets assignés à l'invention sont atteints à l'aide d'un appareil électroménager de préparation culinaire du genre robot ménager, comportant un récipient de travail et un bloc moteur entraînant par l'intermédiaire d'un axe un ensemble de travail rotatif sur lequel est monté un outil de travail disposé dans un plan dont la normale est inclinée par rapport à l'axe de rotation de l'ensemble de travail, caractérisé en ce que ledit ensemble de travail comporte au moins deux masses d'équilibrage ainsi qu'une embase susceptible de s'appuyer sur un relief ou une conformation formé(e) sur le fond du récipient.

Ainsi l'ensemble de travail n'exerce-t-il plus d'efforts importants sur un axe inférieur lié au récipient. Il devient alors possible de supprimer l'insert.

D'autres particularités et avantages ressortiront mieux à la lecture de la description donnée ci-après en référence aux dessins annexés donnés à titre d'exemples illustratifs mais non limitatifs dans lesquels :
- la figure 1 montre selon une coupe longitudinale partielle un exemple de réalisation d'un appareil électroménager de préparation culinaire conforme à l'invention.
- la figure 2 montre selon une vue de dessus partielle un exemple de réalisation d'un appareil électroménager de préparation culinaire conforme à l'invention,
- la figure 3 montre selon une coupe longitudinale partielle un autre exemple de réalisation d'un appareil électroménager de préparation culinaire conforme à l'invention.

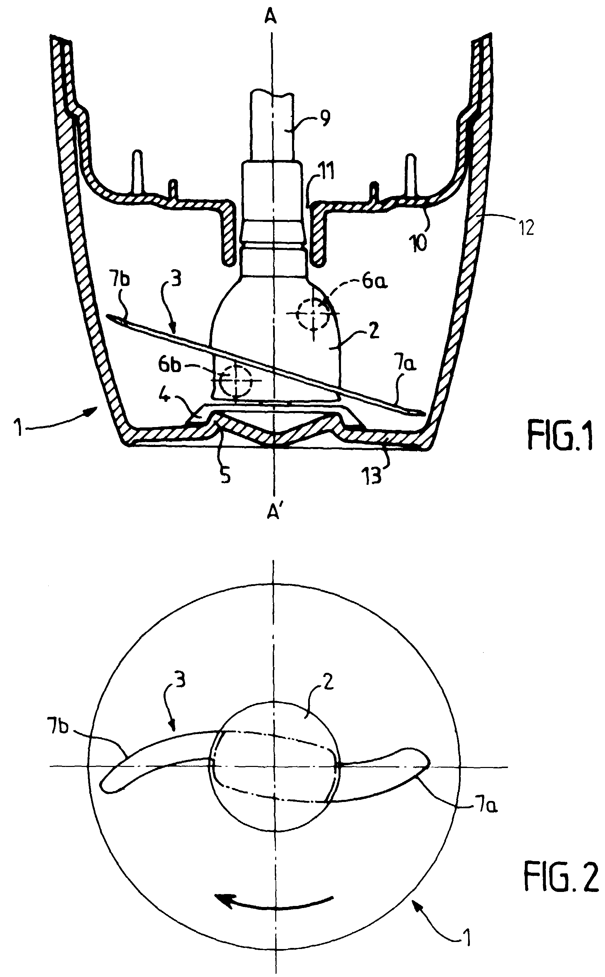

L'appareil électroménager de préparation culinaire conforme à l'invention montré aux figures 1 à 3 comporte un récipient 1 de travail, de toutes formes appropriées, par exemple sensiblement cylindrique, délimité extérieurement pas des parois latérales 12 et un fond 13. Le récipient 1 est réalisé en tous matériaux, et de manière avantageuse, en tout matériau permettant son utilisation dans un four, tels que du verre ou des matériaux céramiques, ou dans un four à micro-ondes, tels que des matériaux à base de polymères, ou encore du verre ou des matériaux céramiques.

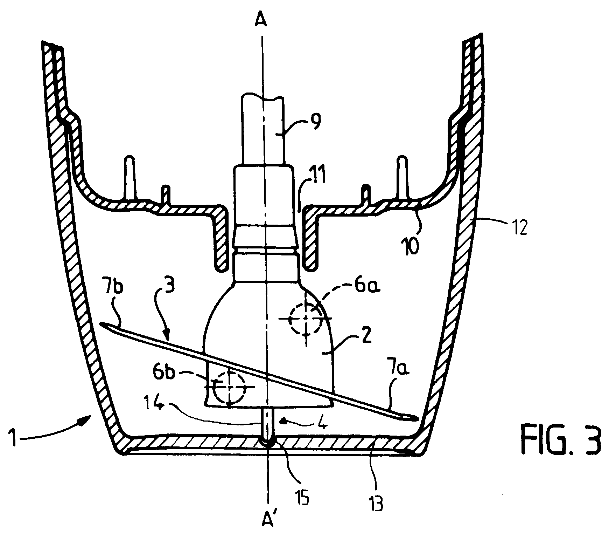

L'appareil comporte également un ensemble de travail rotatif 2, entraîné par un bloc moteur, non représenté aux figures, par l'intermédiaire d'un axe entraîneur 9 avantageusement amovible. Sur l'ensemble de travail 2 est monté un outil de travail 3 disposé avantageusement dans un plan dont la normale est inclinée par rapport à l'axe de rotation A-A' dudit ensemble de travail 2. L'ensemble de travail rotatif 2 comporte une embase 4, avantageusement mobile en rotation autour de l'axe A-A' de rotation de l'ensemble de travail 2, susceptible de s'appuyer sur un relief 5 ou une conformation 15 formé(e) sur le fond du récipient 1. L'exemple de réalisation présenté à la figure 1 comporte une embase 4 mobile en rotation autour de l'axe A-A' de rotation de l'ensemble de travail 2. L'exemple de réalisation présenté à la figure 3 comporte une embase consistant en un axe 14 tourillonnant dans une conformation 15 ménagée sur le fond du récipient 1. L'ensemble de travail 2 comporte au moins deux masses 6a, 6b d'équilibrage, constituées avantageusement par des billes, de préférence métalliques, tel que représenté aux figures 1 et 3. Ainsi l'axe pour lequel se produit une rotation équilibrée de l'ensemble de travail 2 comportant l'outil de travail 3 est confondu avec l'axe de rotation géométrique de l'ensemble de travail 2. Ainsi il n'est plus nécessaire d'utiliser un moyen assurant le maintien axial de l'ensemble de travail de manière ferme au fond du récipient 1, tel que par exemple un insert métallique. De plus cette disposition supprime l'essentiel des vibrations habituellement rencontrées dans un appareil.

De manière avantageuse, l'outil de travail 3 comporte deux lames 7a, 7b de longueur inégale. De manière avantageuse également, le récipient 1 est en forme de bol et présente des parois **12** s'évasant à partir du fond **13**, tel que représenté à la figure 1. La lame 7a de l'outil 3 la plus courte est avantageusement plus large que la lame 7b la plus longue, de manière à équilibrer l'outil. Cette disposition permet d'éviter un balourd dû à la différence d'énergie cinétique des deux lames.

Ainsi même dans le cas de l'utilisation d'un outil 3 comportant deux lames de longueur différente il n'est plus nécessaire d'utiliser un moyen servant à maintenir l'ensemble de travail 2 en rotation autour de son axe qui puisse résister à des efforts importants.

Avantageusement, l'embase 4 est mobile en translation selon l'axe A-A'. Cette configuration permet notamment de faciliter le nettoyage de l'ensemble de travail rotatif 2.

De manière avantageuse, l'appareil selon l'invention comporte une coupelle 10 venant en contact annulaire de manière au moins partielle avec le récipient 1 et comportant un orifice 11 prévu pour le passage de la partie supérieure de l'ensemble de travail 2 disposé dans le récipient 1. Ainsi lorsque l'utilisateur retire le bloc moteur de la cuve, l'axe entraîneur 9 lié au bloc moteur se dégage de l'ensemble de travail 2, lequel est maintenu par la coupelle 10. L'ensemble de travail 2 comportant l'outil 3 tourne alors de façon stable sans déséquilibre et est freiné progressivement par l'action des forces de frottement. De plus l'utilisateur ne peut accéder à l'outil 3 avant son arrêt.

Un avantage considérable de la présente invention consiste en l'utilisation d'un récipient 1 ne comportant pas d'insert métallique. Il est alors possible de réaliser le récipient 1 en tout type de matériau, et particulièrement dans un matériau tel que le verre, qui peut notamment passer du congélateur au four, dans sa qualité Pyrex™.

A titre de variante, non représentée aux figures, l'outil de travail 3 comporte au moins deux lames réalisées au moyen de deux pièces distinctes. A titre de variante pouvant être combinée ou non avec la variante précédente, et également non représentée aux figures, les lames formant l'outil de travail 3 sont disposées selon au moins deux plans éventuellement parallèles mais non confondus. Par exemple les lames formant l'outil de travail 3 sont sensiblement parallèles mais fixées axialement de manière décalée l'une par rapport à l'autre sur l'axe A-A' de rotation de l'ensemble de travail 2.

## Revendications

1. Appareil électroménager de préparation culinaire du genre robot ménager, comportant un récipient (1) de travail ainsi qu'un ensemble de travail rotatif (2), entraîné par un bloc moteur par l'intermédiaire d'un axe entraîneur (9), et sur lequel est monté un outil de travail (3) disposé dans un plan dont la normale est inclinée par rapport à l'axe de rotation A-A' dudit ensemble de travail (2), caractérisé en ce que ledit ensemble de travail (2) comporte au moins deux masses (6a, 6b) d'équilibrage ainsi qu'une embase (4) susceptible de s'appuyer sur un relief (5) ou une conformation (15) formé(e) sur le fond du récipient (1).

2. Appareil selon la revendication 1, caractérisé en ce que l'outil de travail (3) comporte deux lames (7a, 7b) de longueur inégale, la lame (7a) la plus courte étant plus large que la lame (7b) la plus longue.

3. Appareil selon l'une des revendications 1 ou 2 caractérisé en ce que l'embase (4) est mobile en rotation autour de l'axe A-A' de l'ensemble de travail (2).

4. Appareil selon l'une des revendications 1 à 3, caractérisé en ce que l'embase (4) est mobile en translation selon l'axe A-A'.

5. Appareil selon l'une des revendications 1 à 4, caractérisé en ce qu'il comporte une coupelle (10) venant en contact annulaire de manière au moins partielle avec le récipient (1) et comportant un orifice (11) prévu pour le passage de la partie supérieure de l'ensemble de travail (2) disposé dans le récipient (1).

6. Appareil selon l'une des revendications 1 à 5, caractérisé en ce que le récipient (1) est en verre.

## Patentansprüche

1. Elektrohaushaltsgerät zur Nahrungszubereitung in der Art einer Küchenmaschine, mit einem Arbeitsbehälter (1) sowie einer drehbaren Arbeitsgruppe (2), die von einem Motorblock über eine Antriebswelle (9) angetrieben ist und auf welcher ein Arbeitswerkzeug (3) angebracht ist, das in einer Ebene angeordnet ist, deren Normale bezüglich der Drehachse A-A' der Arbeitsgruppe (2) geneigt ist, dadurch gekennzeichnet, daß die Arbeitsgruppe (2) mindestens zwei Ausgleichsmassen (6a, 6b) sowie eine Grundplatte (4) aufweist, die auf einer am Boden des Behälters (1) angeformten Erhöhung (5) oder Formgebung (15) anliegen kann.

2. Gerät nach Anspruch 1, dadurch gekennzeichnet, daß das Arbeitswerkzeug (3) zwei Messer (7a, 7b) mit ungleichen Längen aufweist, wobei das kürzere Messer (7a) breiter als das längere Messer (7b) ist.

3. Gerät nach Anspruch 1 oder 2, dadurch gekennzeichnet, daß die Grundplatte (4) um die Achse A-A' der Arbeitsgruppe drehbeweglich ist.

4. Gerät nach einem der Ansprüche 1 bis 3, dadurch gekennzeichnet, daß die Grundplatte (4) entlang der Achse A-A' translatorisch beweglich ist.

5. Gerät nach einem der Ansprüche 1 bis 4, dadurch gekennzeichnet, daß es einen Teller (10) aufweist, der mindestens teilweise ringförmig mit dem Behälter (1) in Kontakt gelangt und eine Öffnung (11) enthält, die für den Durchtritt des oberen Teils der im Behälter angeordneten Arbeitsgruppe (2) vorgehen ist.

6. Gerät nach einem der Ansprüche 1 bis 5, dadurch gekennzeichnet, daß der Behälter (1) aus Glas besteht.

## Claims

1. An electrical kitchen appliance of the food-processor kind, the appliance comprising a working receptacle (1) and a rotary working assembly (2) driven by a motor unit via a drive shaft (9), and on which a working tool (3) is mounted that is disposed in a plane whose normal is inclined relative to the axis of rotation A-A' of said working assembly (2), the appliance being characterized in that said working assembly (2) has at least two balancing masses (6a, 6b) and a base (4) suitable for pressing against a shape (15) or a portion in relief (5) formed in or on the bottom of the receptacle (1).

2. An appliance according to claim 1, characterized in that the working tool (3) has two blades (7a, 7b) of different lengths, the shorter blade (7a) being wider than the longer blade (7b).

3. An appliance according to claim 1 or 2, characterized in that the base (4) is movable in rotation about the axis A-A' of the working assembly (2).

4. An appliance according to any one of claims 1 to 3, characterized in that the base (4) is movable in translation along the axis A-A'.

5. An appliance according to any one of claims 1 to 4, characterized in that it includes a cup (10) coming into annular contact at least in part with the receptacle (1) and having an orifice (11) through which the top portion of the working assembly (2) located in the receptacle (1) passes.

6. An appliance according to any one of claims 1 to 5, characterized in that the receptacle (1) is made of glass.
